# EUROPEAN PATENT SPECIFICATION

(11) **EP 0 434 728 B1**
(45) Date of publication and mention of the grant of the patent: **19.02.1997**
(21) Application number: 89910351.9
(22) Date of filing: 17.08.1989
(51) Int. Cl.: G06F 17/60, G06M 9/00, G06M 3/02

(54) **CARD COUNTER**
KARTENZÄHLVORRICHTUNG
COMPTEUR DE CARTES

(30) Priority: 19.09.1988 US 246516
(43) Date of publication of application: 03.07.1991
(73) Proprietor: DYNETICS ENGINEERING CORPORATION, Lincolnshire, IL 60069-4209 (US)
(72) Inventor: HILL, James, E., Wheeling, IL 60090 (US)
(74) Representative: Behrens, Dieter, Dr.-Ing.
(86) International application number: US8903537
(87) International publication number: WO9003615

(56) References cited:
- EP-A- 0 169 487
- GB-A- 2 148 030
- JP-A-63 200 293
- US-A- 3 813 523
- US-A- 4 128 756
- US-A- 4 417 351
- US-A- 4 420 819
- US-A- 4 532 421
- US-A- 4 563 739
- US-A- 4 704 517
- US-A- 4 771 443
- IBM TECHNICAL DISCLOSURE BULLETIN, vol. 13, no. 11, April 1971, page 3360; H. PUKITA: "Counter for packaged flat articles"

## Description

### Background of the Invention

This invention generally relates to item counters and, more specifically, to card counters, such as credit card counters which automatically count the number of cards standing on edge in a box of cards and methods of using same to take card inventories.

Such card counters are well known in the credit card issuing industry where it is most important to keep strict inventory control of both embossed and blank credit cards to prevent credit card fraud. Examples of such counters and their assorted optical scanning systems and related circuitry are shown in United States Patent Nos. 3,581,067 reissued as Re 27,869; 3,790,759; 3,663,803; 3,813,523; 3,889,136 and 4,373,135. Other counters and optical sensor systems are also shown in U.S. Patents Nos. 4,384,195; 4,677,682; 4,4707,843 and 4,481,667.

One of the principal inadequacies of known card counters is their inability to automatically provide long term storage of inventory control information in a form suitable for retrieval and manipulation by a conventional computer or in the form of hard printed copy, on site. Instead, users of such card counters have had to manually transcribe the temporarily stored inventory control information obtained from the card counter onto inventory control sheets. The inventory control information then had to be again manually input into a computer at a remote location if computerized processing of the information was required. Such a system can result in transcription errors and lost information. It is also an invitation for fraud, since the only permanent records of the operation of the card counter and the operational results are manually prepared by the operators and can therefore be easily falsified or altered.

There is also a disadvantage associated with preset number selection. The prior card counters are provided with means for preselecting a preset number to which the actual count of a full box of cards is compared. This is done to verify accuracy of the count in a box when the number of cards which should be in the box is already known. The only way to preselect the preset number or to change the preset number was by means of a manual thumb wheel rotary switch for each of the three digits of a typical preset number, such as the number five hundred. Disadvantageously, such thumb wheel switches are not only expensive, they are somewhat awkward to use and prone to mechanical failure.

A counter which allows the entering of a final count to an accumulator by pressing a button is described by Pukita, H.: "Counter for packaged flat articles" JBM, Technical Disclosure Bulletin, Vol.13, No.11, April 1971, page 3360.

Accuracy of the count is, of course, the quintessential requirement for a card counter. For this reason it is known to employ redundancy counting by means of first and second sensors which concurrently scan the edges of the cards to feed the inputs of first and second counters, respectively. The final counts at the end of the scan period are then compared. If the final counts are not equal, then an error indication is provided. If they are equal, then the count is verified, and entry of the verified count into an accumulator memory is enabled. Unfortunately, the fact that the final counts are the same does not eliminate the possibility that they have not both miscounted at different times during the same period. Accordingly, counting errors are not entirely eliminated by comparison of only the final counts.

Another problem with known card counters is that no means is provided to control an accumulator memory which keeps a card count and box count total of a plurality of boxes of cards of a given group or series of cards to be totalled or subtotalled. In the known card counter, all card counts which were verified were added to the accumulative total in the accumulator memory, without exception, or none were added if the accumulator were off. Accordingly, the card counter cannot be used to concurrently count two different groups of cards. Once an inventory count was begun on a first group of cards, while it could be interrupted to count a box of another group of cards, the other group could not be accumulated.

In many instances, scores of cards are counted which have already been precounted. Unfortunately, there is no way for known card counters to automatically use the precount information since these labels do not contain the information in a form designed to be machine readable, such as bar code, and no counters are known which can read or use inventory information from such labels. As a result the benefits of that precount information are effectively lost to the card counter.

### Summary of the Invention

It is therefore an object of the present invention to provide a card counter and which overcome the foregoing problems and disadvantages of known card counters.

A card counter meeting this object is defined in appended claim 1. Preferred embodiments are defined in the subclaims.

The preset memory system for preselecting said preset number comprises a preset memory for recording said preselected number and a preset data entry system including means responsive to said cards counting means for selectively causing the number of cards finally counted to be entered into said preset memory as the preset number.

The objective of improving count accuracy is achieved in part through provision of a card counter with a count verification system that includes means for detecting a counting error when the two counts of a pair of redundant sensors differ from one another during the scan even if the final counts are the same.

Increased versatility of use of the card counter is achieved by means of an accumulator controller which enables the concurrent counting of two different groups of cards.

A further aspect of the card counter of the invention which enhances accuracy is another verification system which employs reading a precount indicia associated with each box, automatically comparing the actual count of detected cards of the box with the precount number of the precount indicia and providing an indication of error in the event the precount number does not equal the actual count of the box.

### Brief Description of the Drawings

The foregoing objects, features and advantages will be explained in greater detail with reference to the several figures of the drawing, in wnich:
Fig. 1 is a perspective view of a preferred embodiment of the card counter of the present invention;
Fig. 2 is a schematic block diagram of the control circuit of the card counter of Fig. 1;
Fig. 3 is a perspective view of an enlarged portion of the counter of Fig. 1 shown connected with a printer and with a remote computer;
Fig. 4 is an illustration of the type of card counting information caused to be printed by the card counter;
Figs. 5A and 5B comprise an algorithm, or flow chart, of the preferred computer program used by the microprocessor of the control circuit of Fig. 4 during power-up when power is first applied including a self-diagnostic sub-routine;
Fig. 6 is an algorithm of a PRESET MEMORY SYSTEM SUB-ROUTINE;

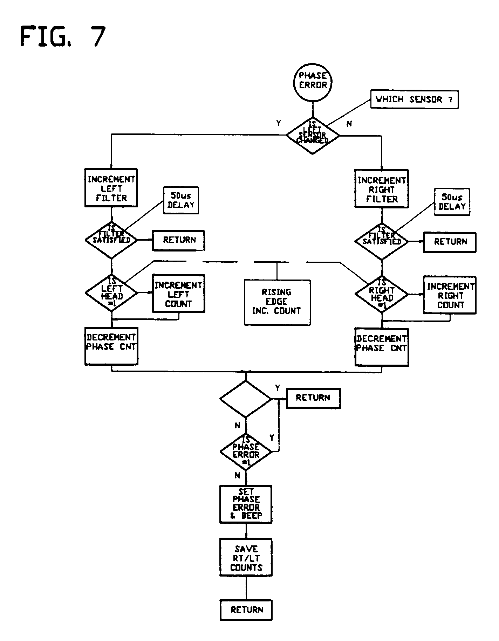

Fig. 7 is an algorithm of a PHASE ERROR DETECTION SUB-ROUTINE;
Fig. 8 is an algorithm of an ACCUMULATOR CONTROLLER SUB-ROUTINE;
Figs. 9A and 9B are an algorithm of a SCAN CONTROL SUB-ROUTINE;
Fig. 10 is an enlarged, perspective, schematic illustration of the precount reading verification sensor of the present invention; and
Fig. 11 is an algorithm of a preferred program for the PRE-COUNT VERIFICATION SUB-ROUTINE.

### Detailed Description

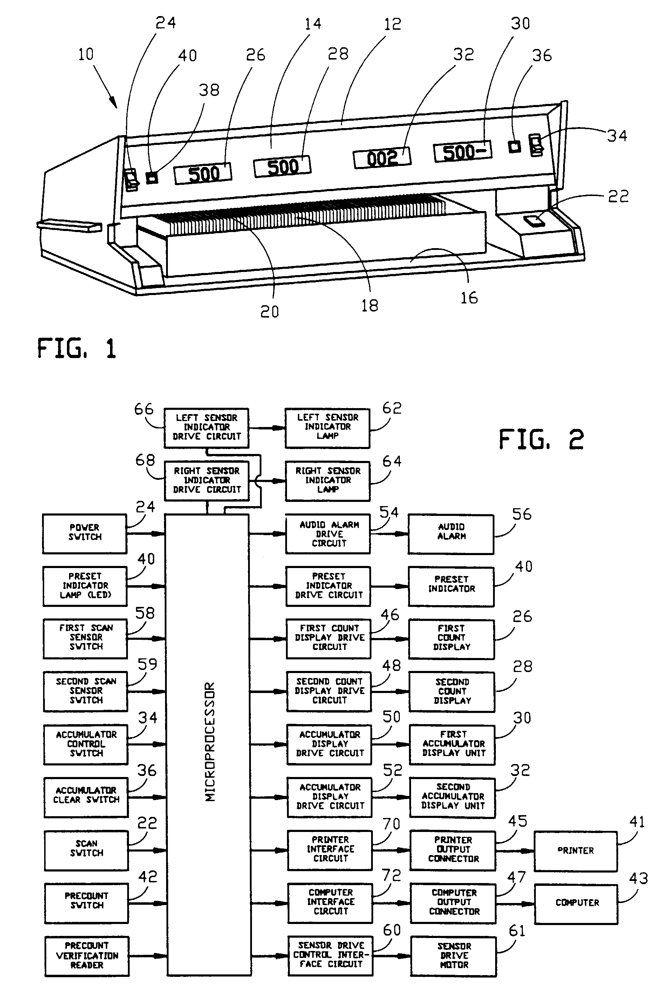

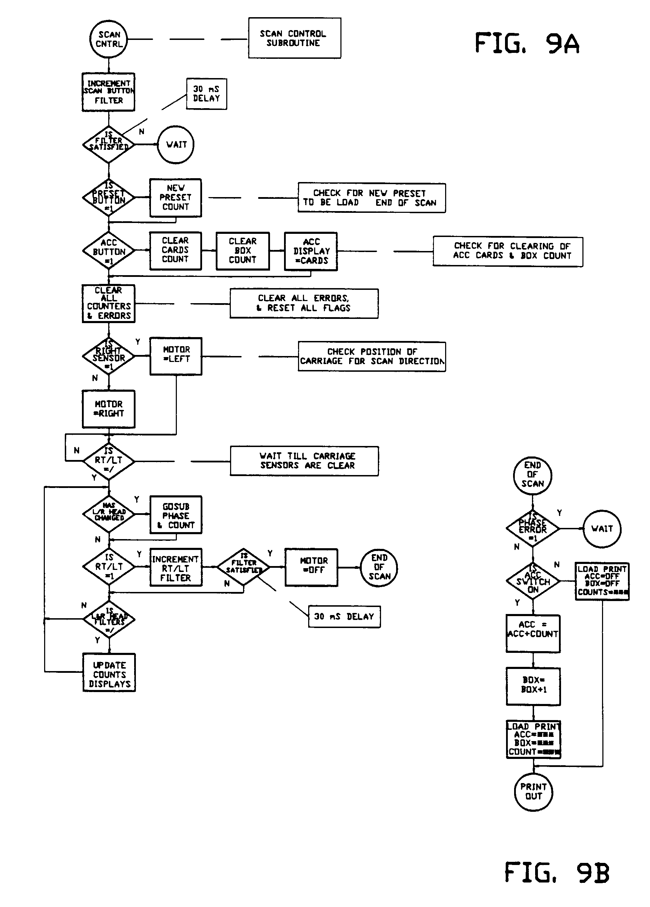

Referring to Fig. 1, the card counter 10 of the present invention is seen to comprise a low profile housing 12. A control panel 14 at the front of the unit provides mounting for a plurality of control switches and electronic alphanumeric display units used for operating the card counter 10. The cards 13, such as plastic credit cards, are customarily stacked in a box 19 on edge and then placed into a card shelf 16. The box 19 is slid atop the card shelf 16 to a position in which the top edges 20 of the cards 18 are underlying and aligned with an elongate scan track located beneath and behind the control panel 14. A pair of scanning sensors are caused to move along the track by a sensor drive mechanism as will be described in detail below with reference to Figs. 9A and 9B. The scanning sensors are driven along the scanning path defined by the scan track to optically detect the top edges 20 to produce card detect pulses, one for each card, which, after noise filtering, are counted and stored. This scanning and counting operation, or scan cycle, is initiated each time a scan button switch 22 is actuated, and the power switch 24 is in a power on position.

The various counting totals are indicated on a plurality of substantially identical, electronic, alphanumeric display units. The count of the first, or left, and second, or right, scanning sensors are displayed on suitable first and second card count displays 26 and 28 at the end of each scan cycle. The accumulated card count of a plurality of boxes 19, i.e. the accumulated card count and the total number of boxes of cards 18 which have been counted to obtain the accumulated card count, i.e. the box count, are shown on the accumulator display units 30 and 32. These counts are accumulated when an accumulator control switch 34 has been actuated into an accumulator on position. The memories associated with the accumulator display units 32 and 34 can be cleared in response to operation of the scan switch 22 after being enabled by successive actuations of an accumulator clear switch 36.

One of the two remaining operator controls is a preset control switch 38 with an associated preset indicator lamp 40, preferably an LED, that is lit when the preset control switch is in a preset on state. As will be explained below with reference to Figs. 2, 5 and 6, when the preset switch is on, count verification includes comparing the actual final card counts for each box with a preselected preset number. The preset number is the standard number of cards that are supposed to be in a box, such as the number five hundred.

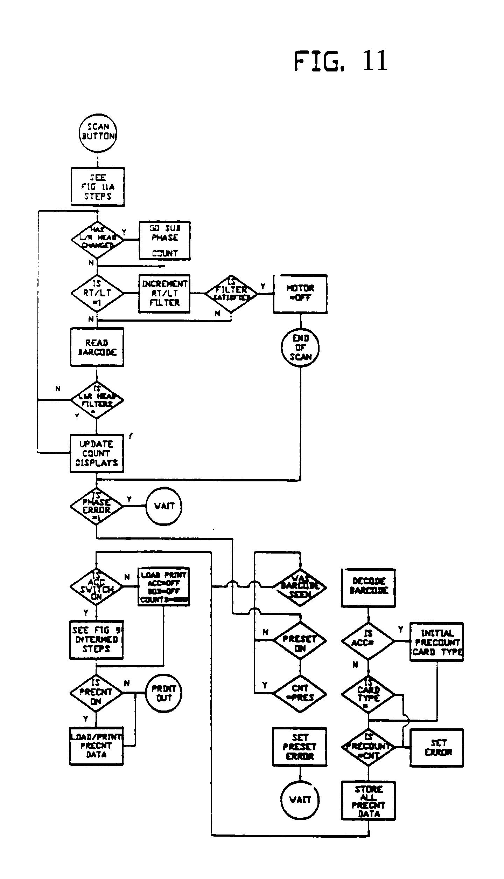

A precount verification function operates automatically each time the operator scans a box of cards with a label containing precount information indicia and detects a start code. As will be described below with reference to Figs. 2 and 13, operation of the precount verification function will cause a precount sensor, Fig. 11, to optically or otherwise read an indicia of a previous card count which is affixed to the box of cards for comparison with the actual count and, if in an on state, with the preset number, for purposes of count verification.

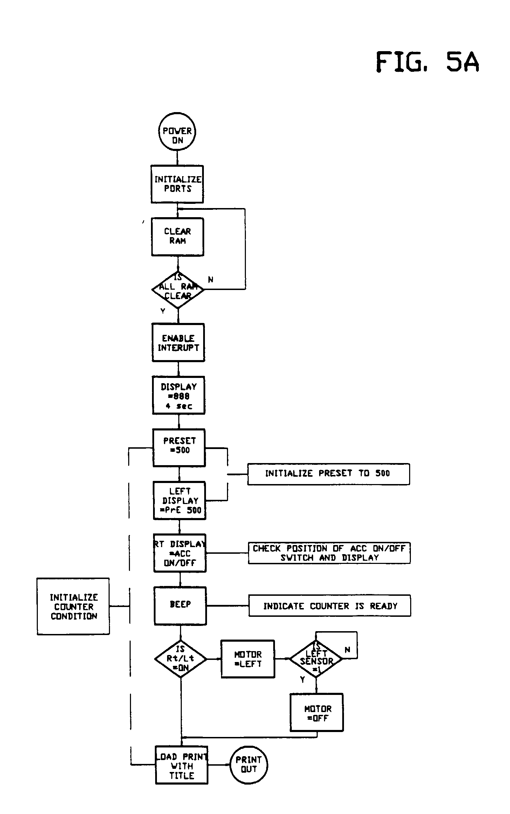

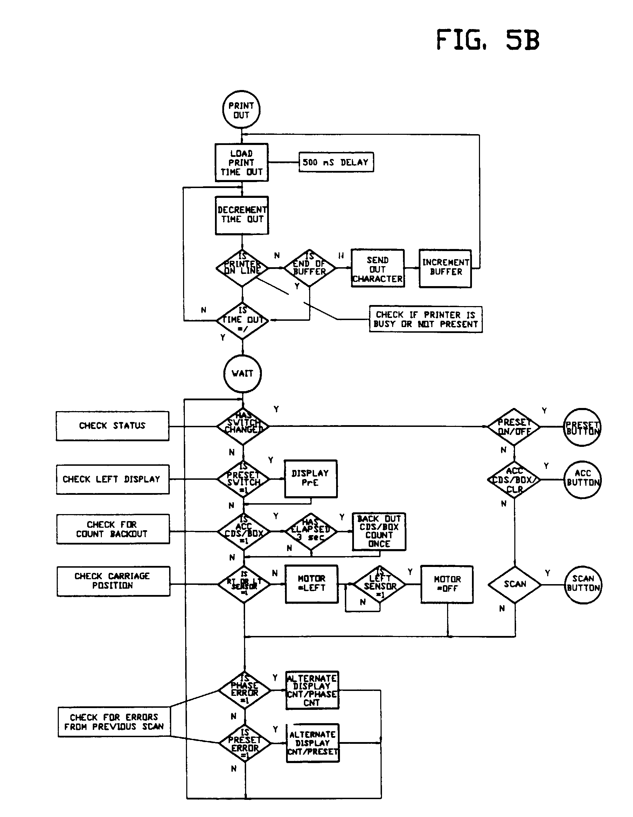

Various ones of the operator control switches perform additional functions, and the card count displays 26 and 28 and the accumulator displays 30 and 32 are used to provide messages to the operator concerning the status and operation of the card counter 10. Referring also to Fig. 2 and the flow card of Fig. 5A, if neither a printer 41 nor a computer 43 are connected with associated printer output connector 45 and computer output connector 47 and selected for operation, once power is turned on through manual actuation of power switch 24, a microprocessor 44 causes a first count display drive circuit 46, a second count display drive circuit 48, the first accumulator display unit 30 and the second accumulator display unit 32 to show the numeral eight in all alphanumeric locations for several seconds.

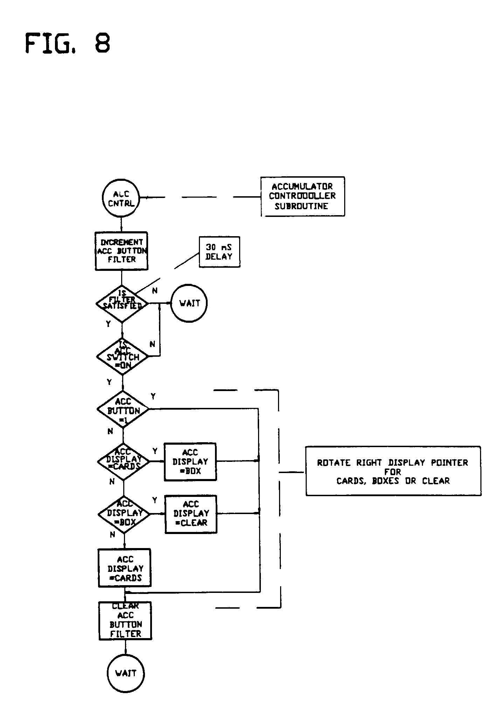

Afterwards, the microprocessor 44 under control of a program flow charted in Fig. 5A will then cause an audio alarm drive circuit 54 to sound an audio alarm 56 to signal the operator that the card counter 10 is ready for use. The microprocessor 44 under control of the program flow charted in Fig. 5B then causes the first card count display 26 to display "PrE", and the second count display 28 is caused to display "500", which is the standard preset number, under control of an accumulator controller sub-routine flow charted in Fig. 8. The accumulator card count and box count displays 30 and 32 are caused to show either "ACC ON" or "ACC OFF" depending upon the position of the accumulator control switch 34.

With the accumulator control switch 34 in the on position, the microprocessor 44 is enabled to accumulate and store the accumulated card and accumulated box counts in accumulator memories which are a part of its random access electronic memory. When the accumulator control switch 34 is in an off position, the operator may still use the card counter 10 to count cards, but the card and box counts will not be added to the card count and box count accumulator memories. More importantly, any count totals stored in the accumulator memory are not cleared merely in response to turning off the accumulator function. Accordingly, any totals which were stored in the accumulator memory when the accumulator control switch 34 is turned to the off positon are held in the accumulator memory and are not lost. When the accumulator control switch 34 is returned to the on position, the totals which were in the accumulator memories when turned off will reappear on the accumulator display units 30 and 32. Preferably, when one accumulator memory is disabled, another one is enabled so inventory of two different groups of cards may be taken concurrently.

According to the invention, a method of concurrently taking inventory of different groups of cards by using a single card counter 10 can thereby be achieved. This is done by first enabling the accumulator to add the number of cards in each box of a first group of cards to be added to the amount stored in the accumulator card memory associated with accumulator displays 30 and 32 while the counter is being used for an inventory of the first group of cards. When it is desired to also count cards of a second group without first ending the inventory taken of the first group of cards, the accumulator card memory is disabled by actuation of the accumulator control switch 34 into its off position. The card counter 10 is then used to count a second group of cards 18 while the accumulator card memory remains disabled. After the second group of cards 18 has been counted and recorded (by recording the card count displayed on card count displays 26 and 28 for each box of the second group or by storing them in a second accumulator memories) the accumulator control switch 34 is then turned back on to again enable the accumulator to accumulate counts of the first group of cards. The card counter 10 is then used to resume counting of the first group of cards. If a second accumulator memory is provided, it is preferably enabled when the first accumulator is disabled and vice versa.

In keeping with another aspect of the invention, the accumulator clear switch 36 performs multiple control functions. One of these enables an operator to "back out", or deduct, the last card count and last box from the accumulator memories respectively associated with accumulated card count and accumulated box count shown on displays 30 and 32. A last count memory portion of the electronic memory of microprocessor 44, or last count memory, continues to temporarily store the last card count after entry thereof into the card accumulator memory until the next scanning cycle. The microprocessor 44 causes the count in this last count memory, which may comprise either the left or right card count memories, to be deducted from the card count accumulator memory in response to the accumulator clear switch 36 being held in an actuated state for a preselected time period longer than normal actuation, such as two seconds. At the end of the time period, the last card count is deducted from the total in the card count accumulator memory and the box count accumulator memory is reduced by one, and the audio alarm is briefly actuated to indicate same. Once a count has been "backed out" of the accumulator memory, it cannot be added back except by recounting the box of cards. In other words, the microprocessor 44 prevents the "back out" function from being performed more than once per scan cycle. Once the next scan cycle has been completed, it is again possible to deduct the last count.

A method is thereby provided for correcting an inadvertent mistake of adding to an accumulated total of one group of cards, a card count from different group of cards. This is done by storing the last count of each of a succession of card counts after accumulation of the last count and then deducting the last count from the accumulated total in the event of detecting that the last count was the count for a box of cards of a group of cards not to be accumulated with the group of cards previously counted. The operator then resumes counting and accumulating cards of the group to be accumulated without error and without beginning anew which could otherwise be required.

Referring also to Figs. 9A and 9B, The accumulator clear switch 36 performs additional functions. If it is repetitively actuated and then deactuated before the lapse of the preselected time period, it will cause display of the accumulated totals up to a count of 999,999 and then enablement of clearing of the accumulator memories in response to actuation of the scan switch 22. If the accumulator clear switch 36 is again temporarily actuated, the microprocessor 44 causes the accumulator displays 30 and 32 to show the accumulated box count. If the accumulator clear switch 36 is momentarily actuated while the box count is being displayed, the microprocessor 44 enables the accumulator memories to be cleared and causes the accumulator displays 32 and 34 to show all zeros to indicate same. However, the accumulator memories, although enabled to be cleared under these conditions, are not actually cleared until the scan switch 22 is actuated to scan a new box of cards 18 while the memories are enabled for clearing. The card count 10 may be recycled to the card count display mode by again momentarily actuating the accumulator clear switch 36, before actuation of the scan switch 22.

Performing these multiple actuations of the clear switch 36 plus actuation of the scan switch 22 advantageously reduces the chances of inadvertent clearing of the accumulator memories. Once the scan switch 22 is pressed, when all zeros are showing in accumulator displays 32 and 34, then and only then are the accumulator memories cleared and can no longer be recalled. In that event, at the end of the scan, the new accumulated card and box counts are displayed. A method of card inventory taking is thereby recommended which requires the above multiple steps of multiple switch actuations in order to clear accumulator memories in an automated card counter.

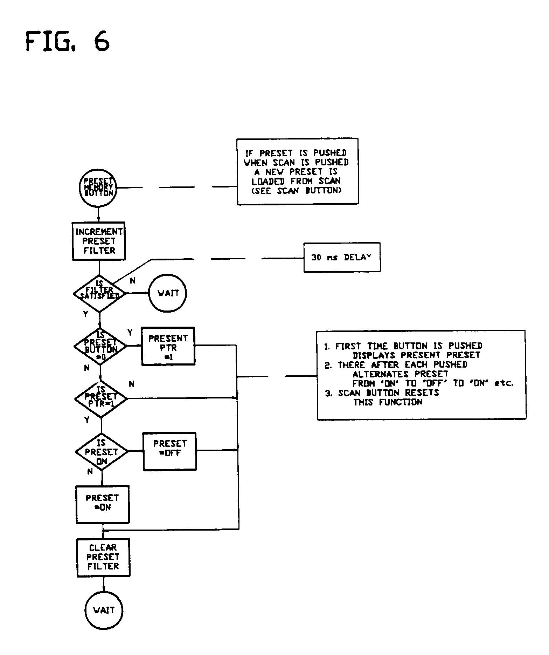

Referring also to Fig. 6, another advantageous feature of the invention is the manner in which a preset number, other than the standard preset number, is preselected. This is accomplished through actuation of both the preset control switch 38 and the scan switch 22, when the preset function has been selected by actuation of the preset control switch 38 to cause the preset indicator lamp 40 to light, or turn on. When the preset control switch 38 is on, the audio alarm 56 is sounded in the event the card count of any box 19 does not match a preset number stored in a preset memory of the microprocessor 44. If the preset is on and the audio alarm 56 is caused to sound, the microprocessor 44 also prevents the card count from being added to the card count accumulator memory and the number one from being added to the box count accumulator memory. Both the left card count and the right card count must match the preset number when the preset is on. In addition to the preset indicator lamp 40, the first time the preset control switch 38 is actuated, the microprocessor 44 shows the on or off status of the preset and the preset number on the card count display units 26 and 28. The second actuation of the preset control switch 38 causes the preset function to change status.

When the power switch 24 is first actuated, the microprocessor 44 automatically causes a standard preset number, such as five hundred, to be entered into a preset number memory portion of its electronic memory, or preset memory. If the operator chooses to change the preset number to enable counting and card count accumulation of a different number of cards per box 19, the number in the preset memory is changed through actuation of the scan switch 22 to count a box of cards 18 into the preset memory. A preset data entry system controlled by the microprocessor 44 causes the card counting circuits associated with the first and second scan sensor circuits 58 and 59 to selectively cause the number of cards to be counted during a scan cycle to be entered into the preset memory as the preset number. This is achieved by holding the preset control switch 38 in an actuated state when the scan switch 22 is actuated to count a box of cards 18. Once the scanning cycle begins, both the scan switch 22 and the preset switch should be released. After the scan cycle is completed, if both the left count and right count shown on card count display units 26 and 28, respectively, match, then the card count will be entered into the preset memory as the preset number. The new preset number can then be displayed to the operator by actuating the preset control switch 38 and keeping it actuated. The microprocessor 44 will then cause the preset number to be shown by the first card count display unit 26. When the preset control switch 38 is released, the card count displays 30 and 32 then return to showing left and right card counts for the box 19.

Thus, an advantageous method of entering a new preset number into a preset memory comprising the steps of counting a preselected number of cards equal to a new preset number desired for entry into the preset memory and selectively causing the count of said counting means to be entered into the preset memory as the preset number.

If the operator wishes to use the card counter 10 to count boxes of cards 18 where the quantity will vary from box to box, the preset function is turned off by actuating the preset control switch 38 twice in succession. If the preset is off, it can likewise be turned back on by again actuating the preset control switch 38 twice in succession. The preset memory is not cleared when the preset function is turned off, so when it is turned on, the preset number will be the same as when it was last turned off.

Referring also to Fig. 9A, the microprocessor 44 responds to actuation of the scan switch 22 to apply motor control signals to a sensor drive control interface circuit 60 which, in turn, energizes a bi-directional sensor drive motor 61 to scan left or scan right across the top edges 20 of the cards 18. A left sensor indicator lamp 62 located at the left hand side of the left card count display 26 is caused to light when the scan cycle has been completed and the sensors are on the left side of the track. A right sensor indicator lamp 64 is caused to light when the scan cycle has been completed in the reverse direction and the sensors are at rest on the right side of the track. These sensor indicator lamps 62 and 64 are respectively driven by left and right sensor interface circuits 66 and 68, respectively. Neither sensor lamp is on during the scan, and also all switches are disabled during the scan.

When it is desired to count only a small number of cards, it is recommended that the cards be placed on the one side of the card shelf 16 marked by the one sensor indicator lamp 62 or 64 which is lit. A card count can be done without a box 19 by placing the cards 18 on the card shelf and against the appropriate end wall and holding them standing up straight with an index finger while the scan switch 22 is actuated to scan the cards.

The card counter 10 is capable of counting any laminated credit card without any color restriction except that gold cards must contain a white core stock in order to be counted. The card tray and sensor track are designed to receive cards measuring up to a maximum size of 54 mm (2.125 inches) by 86 mm (3.375 inches) and a maximum box length of 465 mm (18.250 inches). Shorter boxes may be used without necessity for adjustment, and smaller cards may be counted with an optional adapter (not shown).

In order to insure accurate counting of cards, there are certain procedures which should be followed. Cards should be counted in the supplier's box or the equivalent. Box edges should be 6.4 mm (1/4") below top of card. Regardless of the number of cards being counted, it is especially important that all cards face the same direction, are positioned straight, upright, reasonably square, and well seated in the box. For an accurate count, a view of top surface of cards 18 in the box 19 should not reveal visible ragged edges. When counting embossed cards in the supplier's box, all cards should face the same direction and be positioned straight and upright. If the box 19 is less than full, the cards should be positioned so that the debossed, or back sides of the cards 18 are pressed against one end of box 19. The operator index finger is used to maintain the cards in a straight and upright position. When counting a small handful of cards outside of the box 19, the cards should be placed against one end of the front opening to the card shelf 16. Light pressure with an index finger can be used to hold cards straight and upright. If cards are embossed, the cards should be positioned so that all are facing the same direction with debossed (back) sides against one end of the front opening. The counter detects the space between the cards, so the cards should not be compressed while being counted. When counting cards in a box wrapped in plastic, the plastic should be tight and free of all flaws and wrinkles.

Card count accuracy is also enhanced by provision of a count verification system including a phase error detector. The microprocessor 44 has means for comparing the first and second card counts during the scan cycle and before the first and second final counts are reached. In the event the counts of the first and second card counts differ from one another during the scan cycle, the microprocessor 44 responds by disabling the card count accumulator and box count accumulator from receiving the final counts even if they match, i.e. are equal. The phase error is indicated by showing on the card count display units 26 and 28 the intermediate counts of the left and right sensor 58 and 59 when the phase error occurred.

Card count accuracy is also improved through provision of a filter between the sensors and the input to the microprocessor 44 which filters out both pulses which are too small or which do not occur at the proper time during the scan cycle. The filter preferably comprises an amplitude detector and a pulse timing detector. The amplitude detector is connected between the sensors and the counter and preferably comprises a Schmitt trigger circuit which passes pulses only during the time they exceed a preselected minimum threshold amplitude. Referring to Fig. 9A again, the pulse timing detector is programmed into the microprocessor 44 to pass the amplitude detected pulses to the counter only if they meet certain preselected timing characteristics. These timing characteristics preferably include a minimum pulse width which is approximately four hundred microseconds.

As already noted and shown in Figs. 5A and 5B, count accuracy and reliability are also advantageously enhanced by a self diagnostic system which checks a variety of essential card counter functions each time the power switch 24 is turned on. Specifically, the random access electronic memory, the input/output ports, the display units 26, 28, 30 and 32, the audio alarm 56, the printer interface 70 and the computer interface 72 are all checked.

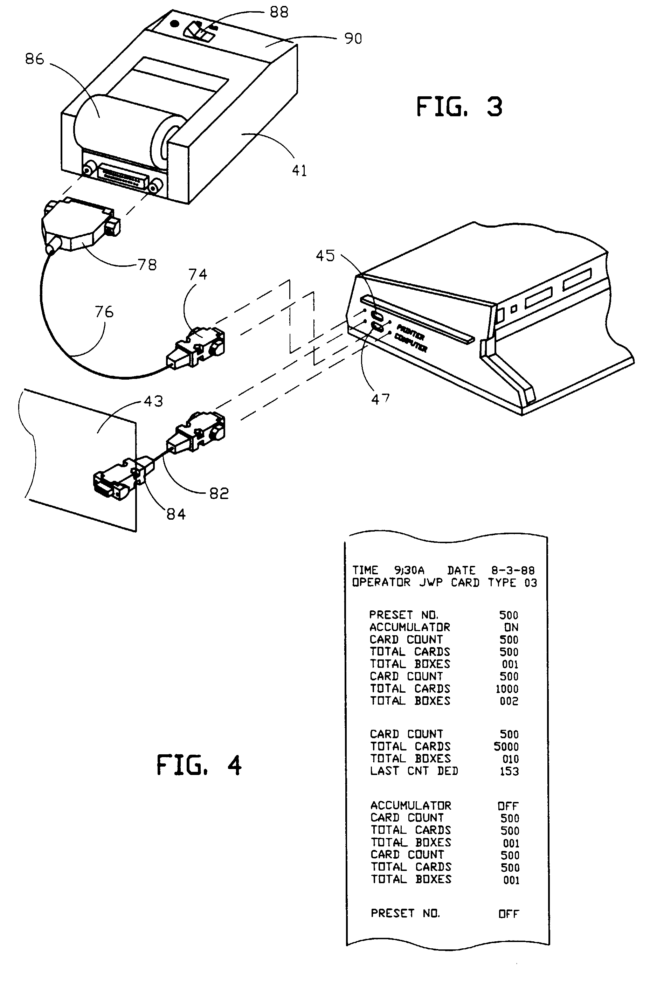

Many of the objectives of this invention are achieved through provision of means associated with the microprocessor 44 for providing data and control signals for automatic operation of a system. These signals are provided by a printer interface circuit 70 to the printer output connector 45 at a proper level for driving printer 41 when releasibly connected therewith. Likewise, a computer interface circuit 72 provides data and control signals from the microprocessor 44 to the computer output connector 47 at a proper level to drive a computer 43. In both instances, communication is established pursuant to the standard R.S. 232 interface protocol. The microprocessor 44 is operated in accordance with the flow chart of Fig. 5B to communicate with the printer 41, Fig. 3. The flow chart (not shown) of the program for communication with the computer 43, Fig. 3, is substantially the same as that for the printer.

Referring to Fig. 3, printer output connector 45 is coupled through a mating female connector 74, cable 76 and a male connector 78 to remote printer 41. Computer output connector 47 is similarly connected to computer 43 through a male connector 80, cable 82 and female connector 82. The printer can be any type of printer with remote controlability and having a replenishable roll of paper 86 and a printer on/off switch 88 all mounted to a housing 90. The computer 43 may be any small business or personal computer with magnetic memory.

When the printer is connected, the power up procedure is somewhat different than when there is no printer as explained above. First, the printer on/off switch must be turned on which will cause it to print the word "READY". The printer is then ready to receive data from the microprocessor 44. The power switch 24 is then turned on which causes all displays to show all eights for approximately five seconds while the self-diagnostic program is run by the microprocessor. At the same time the printer is printing the following heading:

| | |
|---|---|
| DYNETICS® | PC 5300 |
| POWER TURNED ON | |
| OPER | TYPE |
| DATE | TIME |

After a preselected time period, the printer will stop printing and the microprocessor 44 will cause the audio alarm circuit 54 to sound the audio alarm 56 to signal the operator that the unit is ready for use.

Preferably, the printer also has an internal self-diagnostic feature to verify that it is functioning properly. In order to initiate the self-diagnostic test, the on/off switch 88 is held in the on position until the printer starts to print. The printer will then print a sequence of symbols, numbers and letters for a period of approximately two minutes which will indicate if there is any defect.

Referring to Fig. 4, the microprocessor 44 through means of data and control signals applied to printer interface circuit 70 causes the printer 41 to print out for each box of cards counted, i.e. for scan cycle, the status of the accumulator function, the preset number and status of the preset function, the card count for the scan, the total cards counted in the card count accumulator and the total boxes counted in the box count accumulator. Once this inventory information has beer printed, the temporary accumulator members can be cleared in the manner described above, if desired. The amount, if any, "backed out", or deducted from the accumulator memories is also indicated. Similarly, the same inventory information which is printed by the stand alone printer 41, when conveyed through the computer interface circuit 72 and computer output connector 47, a permanent magnetic memory associated with the computer 43 can be employed to permanently store this inventory information.

Thus, it is seen that a card inventory recording system is provided for obtaining card count inventory information and storing that inventory information both temporarily and permanently, this system includes means for controlling a card counter for obtaining and temporarily storing card count inventory information and then causing that inventory information to be stored permanently by printing a hard copy of same. After the hard copy is printed or the inventory information is stored permanently on a magnetic disc or the like, the accumulator memories are cleared or erased for use in subsequent accumulations.

Advantageously, if the inventory information is stored in a relatively permanent memory associated with the computer 43, then the computer 43 is used to retain this information and to manipulate it for preparation of summaries and other inventory reports. Also, the computer can control its own printer to print the same inventory information printed by the printer 41.

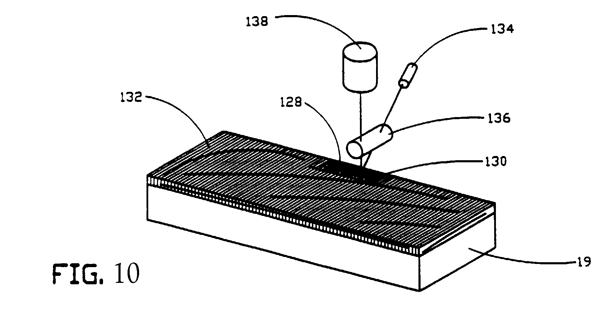

Referring now to Figs. 10 and 11, preferably the card counter is provided with a precount sensor assembly 127 for reading a bar code or other coded indicia 128 of precount inventory information on a precount label 130. In accordance with the invention, the precount label 130 is attached to a box 19 of cards which has been precounted and encased in a plastic shrink wrap 132. The sensor assembly 124 includes a light sensor 134, a light source 138 and a cylindrical lens 136 and produces signals representative of the bar code or other machine readable precount indicia 128 when it scans past the surface of the label 130. The sensor assembly 124 is preferably mounted to move with the pulley belt 94 so it moves across the precount label 130 at the same time that the card counting sensors detect the cards 18.

Referring specifically to Fig. 11, the microprocessor is controlled to use this information to detect a counting error in the event the card count indicated on the precount label 132 does not match tne actual count, or recount, performed on the labelled box 19. If there is no match, then an error indication is provided and the count is prevented from being added to the accumulator memory. Preferably, if the precount card count does not match the preset number an error indication is also provided.

Preferably, the precount label has a start code and includes precount inventory information relating to at least one of card type, date of precount and precount operator identification in addition to the precount card count. The precount function is automatically actuated when a start code is first detected. The microprocessor 44 then stores all the above precount and inventory information.

If the accumulator memory is empty, or clear, then the card type is merely stored as being the card type of a first group of cards. Subsequently, each time a new box is counted, the card type read from the precount label 132 is compared with the card type in storage. If there is no match, a counting error indication is provided and accumulation is prevented. If there is a match, the count is accumulated, and count data is enabled for transmission to at least one of a printer and a computer. The printer then prints out both the precount data and the new, or recent, data together.

While the label is shown on top of the box 19, it could also be mounted on the side. In addition, if preferred, it could be mounted at the end of the box and read when the box 19 is manually mounted into the shelf, or the sensor alternatively is provided with its own separate scanning mechanism apart from that for the card count sensor to read a precount label at the end of the box.

Thus, it is seen that a new inventory control system is achieved by providing boxes of cards with precount information thereon in bar code or other suitable machine readable indicia of precount information, comparing that precount information with actual information from a recount and then providing a count error indication if there is no match of information.

The algorithms and foregoing description should provide sufficient basis to enable anyone skilled in the art to practice this invention.

The foregoing detailed description is a description of only the preferred embodiment and not intended to describe all possible combinations and variations of the inventive aspects thereof.

## Claims

1. A card counter having
means for counting cards,
means for storing the number of cards finally counted,
means for storing a preset number, and
means for comparing the number of cards finally counted with the preset number,
a preset memory system for preselecting said preset number comprising:
preset memory for recording a preset number,
preset data entry system including
means responsive to the means for counting cards for selectively causing the number of cards finally counted to be entered into said preset memory as a new preset number.

2. The card counter of claim 1 characterized in that the preset data entry system includes means for selectively causing the storing means to transfer the count of the number of cards finally counted to the preset memory for storage therein.

3. The card counter of claim 1 or 2 characterized by
a power switch, and in that the preset memory system has means for automatically entering a standard preset number in the preset memory in response to actuation of the power switch.

4. The card counter of claim 1 in which the counting means includes a scanning sensor and a scan switch for actuating the scanning sensor,
characterized in that
the preset data entry system includes
a preset switch for selecting a program mode for the preset memory, and
means responsive to actuation of the scan switch when the program mode has been selected to cause entry of the number of cards counted into the preset memory.

5. The card counter of claim 4 characterized in that the preset data entry system program mode is selected by holding the preset switch in an actuated state upon actuation of the scan switch.

6. The card counter of claim 1 having
a sensor for detecting the individual cards in a box of cards, means responsive to the sensor for establishing an actual count of detected cards for each of a plurality of boxes and an accumulator memory for storing the total counts of a plurality of boxes,
characterized by
a verification system comprising
means for reading a precount indicia associated with each box;
means for automatically comparing the actual count of detected cards of the box with the precount number of the precount indicia, and
means responsive to the comparing means for providing an indication of error in the event the precount number does not equal the actual count of the box.

7. The card counter of claim 6 characterized in that the error indication providing means includes
memory means for storage of the actual counts of a plurality of boxes,
means for disabling the storage entering means from storing the actual count in the accumulator memory in the event the precount number does not equal the actual count, and means for indicating whether the actual count has been stored.

8. The card counter of claim 6 or 7 characterized by
means for comparing the precount number with the preset number recorded in the preset memory, and
means for providing an indication of a preset error in the event the preset number does not equal the precount number.

9. The card counter of any claims 6 - 8 characterized in that the reading means includes means for scanning a preprinted label and means for moving the scanning means.

10. The card counter of claim 6 characterized in that the precount indicia has a start code and includes information codes relating to at least one of
(a) card type
(b) date of precount
(c) precount operator identification,
and the verification system includes means for temporarily storing all the information.

11. The card counter of claim 6 characterized in that precount indicia includes information codes relating to card type, and
the verification system includes
means for storing the precount card type information codes read from the first box of cards of a group of cards when an accumulator count is zero, and
means for comparing the stored precount card type information codes with the precount card type information of subsequent boxes of cards counted.

12. A card counter with first and second means for counting a box of cards to simultaneously obtain first and second final card counts for the box, and a count verification system,
characterized by
means for determining whether the first and second card counts differ from one another during a period of counting before the first and second final counts are reached; and
means responsive to the determining means for detecting a phase error if the first and second counts differ during the counting period even if the final first and second card counts are the same.

13. The card counter of claim 12 characterized by
an accumulative count memory for storing the final count of the cards from each of a plurality of boxes, and means for disabling the accumulative count memory from receiving the final count in response to detection of the phase error.

14. The card counter of claim 12 characterized by
an accumulative card counter memory for storing the card counts of a plurality of boxes, when enabled,
means for enabling the accumulative card count memory to receive the final count for storage in response to the first and second final counts being the same, unless inhibited, and
means for inhibiting the accumulative card count memory from receiving for storing the final count in response to detecting of a phase error, even if otherwise enabled in response to the final counts being the same.

15. The credit card counter of any of claims 12 - 14, characterized by
means responsive to detection of a phase error for indicating the location in a rack of cards of where the phase error occurred.

## Patentansprüche

1. Kartenzählvorrichtung, mit
einer Einrichtung zum Zählen von Karten,
einer Einrichtung zum Speichern der Anzahl der fertiggezählten Karten,
einer Einrichtung zum Speichern einer voreingestellten Anzahl, und
einer Einrichtung zum Vergleichen der Anzahl der fertiggezählten Karten mit der voreingestellten Anzahl,
wobei ein Vorwahlspeichersystem zum Vorwählen der genannten voreingestellten Anzahl umfaßt:
einen Vorwahlspeicher zum Registrieren einer voreingestellten Anzahl,
ein Vorwahldateneingabesystem mit
einer Einrichtung, die auf die Kartenzähleinrichtung anspricht, um wahlweise zu bewirken, daß die Anzahl der fertiggezählten Karten in den genannten Vorwahlspeicher als neue voreingestellte Anzahl eingegeben wird.

2. Kartenzählvorrichtung nach Anspruch 1,
dadurch gekennzeichnet, daß
das Vorwahldateneingabesystem eine Einrichtung umfaßt, die wahlweise zu bewirken vermag, daß die Speichereinrichtung den Zählwert der fertiggezählten Kartenanzahl zum Speichern in den Vorwahlspeicher überträgt.

3. Kartenzählvorrichtung nach Anspruch 1 oder 2,
gekennzeichnet durch einen Leistungsschalter und dadurch, daß das Vorwahlspeichersystem eine Einrichtung zum automatischen Eingeben einer voreingestellten Anzahl als Standardwert in den Vorwahlspeicher in Abhängigkeit von der Betätigung des Leistungsschalters aufweist.

4. Kartenzählvorrichtung nach Anspruch 1, bei der die Zähleinrichtung einen Abtastsensor und einen Abtastschalter zum Betätigen des Abtastsensors aufweist,
dadurch gekennzeichnet, daß
das Vorwahldateneingabesystem umfaßt:
einen Vorwahlschalter zum Wählen eines Programmodus für den Vorwahlspeicher, und
eine Einrichtung, die, wenn der Programmodus gewählt worden ist, auf die Betätigung des Abtastschalters anspricht, um zu bewirken, daß die Anzahl der gezählten Karten in den Vorwahlspeicher eingegeben wird.

5. Kartenzählvorrichtung nach Anspruch 4,
dadurch gekennzeichnet, daß
der Programmodus des Vorwahldateneingabesystems durch Halten des Vorwahlschalters im betätigten Zustand nach Betätigung des Abtastschalters gewählt wird.

6. Kartenzählvorrichtung nach Anspruch 1, mit
einem Sensor zum Feststellen der einzelnen Karten in einem Kartenkasten,
einer auf den Sensor ansprechenden Einrichtung zum Erstellen eines tatsächlichen Zählwertes der in jedem Kasten einer Vielzahl Kasten festgestellten Karten, und
einem Akkumulatorspeicher zum Speichern der Gesamtzählwerte einer Vielzahl Kasten,
gekennzeichnet durch
ein Überprüfungssystem mit
einer Einrichtung zum Lesen eines jedem Kasten zugeordneten Vorzählungszeichens,
einer Einrichtung zum automatischen Vergleichen des tatsächlichen Zählwertes festgestellter Karten des Kastens mit der vorgezählten Anzahl des Vorzählungszeichens, und einer auf die Vergleichseinrichtung ansprechende Einrichtung zur Anzeige eines Fehlers, falls die vorgezählte Anzahl mit dem tatsächlichen Zählwert des Kastens nicht gleich ist.

7. Kartenzählvorrichtung nach Anspruch 6,
dadurch gekennzeichnet, daß
die Fehleranzeigeeinrichtung umfaßt:
einen Speicher zum Speichern der tatsächlichen Zählwerte einer Vielzahl Kasten,
eine Einrichtung zum Sperren der Speichereingabeeinrichtung für das Speichern des tatsächlichen Zählwertes im Akkumulatorspeicher, falls die vorgezählte Anzahl mit dem tatsächlichen Zählwert nicht gleich ist, und
eine Einrichtung zur Anzeige, ob der tatsächliche Zählwert gespeichert worden ist.

8. Kartenzählvorrichtung nach Anspruch 6 oder 7,
gekennzeichnet durch
eine Einrichtung zum Vergleichen der vorgezählten Anzahl mit der Vorwahlanzahl, die im Vorwahlspeicher gespeichert ist, und
eine Einrichtung zur Anzeige eines voreingestellten Fehlers, falls die Vorwahlanzahl mit der vorgezählten Anzahl nicht gleich ist.

9. Kartenzählvorrichtung nach einem der Ansprüche 6 bis 8,
dadurch gekennzeichnet, daß
die Leseeinrichtung eine Einrichtung zum Abtasten eines vorgedruckten Etiketts und eine Einrichtung zum Verstellen der Abtasteinrichtung umfaßt.

10. Kartenzählvorrichtung nach Anspruch 6,
dadurch gekennzeichnet, daß
das Vorzählungszeichen einen Startcode enthält und Informationscodes aufweist, die sich wenigstens auf eine der Angaben
a) Kartentyp
b) Datum der Vorzählung
c) Kennzeichen des Personals, das die Vorzählung vorgenommen hat,
beziehen, und
daß das Überprüfungssystem eine Einrichtung zum vorübergehenden Speichern aller Informationen aufweist.

11. Kartenzählvorrichtung nach Anspruch 6,
dadurch gekennzeichnet, daß
das Vorzählungszeichen auf Kartentyp sich beziehende Informationen enthält, und
daß das Überprüfungssystem umfaßt:
eine Einrichtung zum Speichern der sich auf den vorgezählten Kartentyp beziehenden Informationscodes, die am ersten Kartenkasten einer Kartengruppe abgelesen wurden, wenn ein Akkumulatorzählwert null ist, und
eine Einrichtung zum Vergleichen der gespeicherten, sich auf den vorgezählten Kartentyp beziehenden Informationscodes mit den sich auf den vorgezählte Kartentyp beziehenden Informationen nachfolgender gezählter Kartenkasten.

12. Kartenzählvorrichtung mit einer ersten und einer zweiten Einrichtung zum Zählen eines Kartenkastens, derart, daß für den Kasten ein erster und ein zweiter Kartenendzählwert gewonnen wird, und mit einem Zählwertüberprüfungssystem,
gekennzeichnet durch
eine Einrichtung zum Bestimmen, ob der erste und der zweite Kartenzählwert während einer Zähldauer sich voneinander unterscheiden, bevor der erste und der zweite Zählendwert erreicht sind, und
eine auf die Bestimmungseinrichtung ansprechende Einrichtung zum Feststellen eines Phasenfehlers, wenn der erste und der zweite Zählwert während der Zähldauer sich voneinander unterscheiden, selbst dann, wenn der erste und der zweite Kartenendzählwert die gleichen sind.

13. Kartenzählvorrichtung nach Anspruch 12,
gekennzeichnet durch
einen kumulierenden Zählwertspeicher zum Speichern des Endzählwertes der Karten von jedem Kasten aus einer Vielzahl Kasten, und eine Einrichtung zum Sperren des kumulierenden Zählwertspeichers für den Empfang des Endzählwertes in Abhängigkeit von der Feststellung des Phasenfehlers.

14. Kartenzählvorrichtung nach Anspruch 12,
gekennzeichnet durch
einen kumulierenden Kartenzählwertspeicher, der, wenn eingeschaltet, die Kartenzählwerte einer Vielzahl Kasten zu speichern vermag,
eine Einrichtung, die den kumulierenden Kartenzählwertspeicher, außer wenn gesperrt, für den Empfang des Endzählwertes zum Speichern in Abhängigkeit vom Umstand, daß der erste und der zweite Endzählwert die gleichen sind, freizugeben vermag, und
eine Einrichtung zum Sperren des kumulierenden Kartenzählwertspeichers für den Empfang zum Speichern des Endzählwertes in Abhängigkeit von der Feststellung eines Phasenfehlers, selbst dann, wenn er sonst wegen der Gleichheit der Endzählwerte freigegeben ist.

15. Kreditkartenzählvorrichtung nach einem der Ansprüche 12 bis 14,
gekennzeichnet durch
eine auf die Feststellung eines Phasenfehlers ansprechende Einrichtung zum Anzeigen der Stelle in einem Kartenhalter, an der der Phasenfehler aufgetreten ist.

## Revendications

1. Compteur de cartes comprenant
des moyens pour compter des cartes,
des moyens pour stocker le nombre final de cartes comptées,
des moyens pour stocker un nombre prédéterminé, et
des moyens pour comparer le nombre final de cartes comptées au nombre prédéterminé,
un système de mémoire de prédétermination pour choisir à l'avance ledit nombre prédéterminé comprenant :
une mémoire de prédétermination pour enregistrer un nombre prédéterminé,
un système d'introduction de données de prédétermination comprenant
des moyens sensibles aux moyens pour compter des cartes pour provoquer sélectivement l'introduction du nombre final de cartes comptées dans ladite mémoire de prédétermination comme nouveau nombre prédéterminé.

2. Compteur de cartes selon la revendication 1 caractérisé en ce que
le système d'introduction de données de prédétermination comprend des moyens pour provoquer sélectivement le transfert par les moyens de stockage du compte du nombre final de cartes comptées à la mémoire de prédétermination pour son stockage dans celle-ci.

3. Compteur de cartes selon la revendication 1 ou 2
caractérisé par
un interrupteur de mise en route, et en ce que le système de mémoire de prédétermination possède des moyens pour faire entrer automatiquement un nombre prédéterminé standard dans la mémoire de prédétermination en réponse à l'actionnement de l'interrupteur de mise en route.

4. Compteur de cartes selon la revendication 1 dans lequel les moyens de comptage comprennent un capteur de scannage et un commutateur de scannage pour actionner le capteur de scannage,
caractérisé en ce que
le système d'introduction de données de prédétermination comprend
un commutateur de prédétermination pour sélectionner un mode de programme pour la mémoire de prédétermination, et
des moyens sensibles à l'actionnement du commutateur de scannage lorsque le mode de programme a été sélectionné pour provoquer l'introduction du nombre de cartes comptées dans la mémoire de prédétermination.

5. Compteur de cartes selon la revendication 4 caractérisé en ce que
le mode de programme du système d'introduction de données de prédétermination est sélectionné en maintenant le commutateur de prédétermination dans un état actionné lors de l'actionnement du commutateur de scannage.

6. Compteur de cartes selon la revendication 1 comprenant un capteur pour détecter les cartes individuelles dans une boîte de cartes,
des moyens sensibles au capteur pour déterminer un compte réel de cartes détectées pour chacune d'une pluralité de boîtes et une mémoire cumulative pour stocker les comptes totaux d'une pluralité de boîtes,
caractérisé par
un système de vérification comprenant
des moyens pour lire un indice de précompte associé à chaque boîte;
des moyens pour comparer automatiquement le compte réel de cartes détectées de la boîte avec le nombre de précompte de l'indice de précompte, et
des moyens sensibles aux moyens de comparaison pour fournir une indication d'erreur dans le cas où le nombre de précompte n'est pas égal au compte réel de la boîte.

7. Compteur de cartes selon la revendication 6 caractérisé en ce que
les moyens fournissant une indication d'erreur comprennent
des moyens de mémoire pour le stockage des comptes réels d'une pluralité de boîtes,
des moyens pour interdire aux moyens d'entrée de stockage de stocker le compte réel dans la mémoire cumulative dans le cas où le nombre de précompte n'est pas égal au compte réel, et
des moyens pour indiquer si le compte réel a été stocké.

8. Compteur de cartes selon la revendication 6 ou 7
caractérisé par
des moyens pour comparer le nombre de précompte au nombre prédéterminé enregistré dans la mémoire de prédétermination, et
des moyens fournir une indication d'une erreur de prédétermination dans le cas où le nombre prédéterminé n'est pas égal au nombre de précompte.

9. Compteur de cartes selon l'une quelconque des revendications 6-8 caractérisé en ce que
les moyens de lecture comprennent des moyens pour scanner une étiquette pré-imprimée et des moyens pour déplacer les moyens de scannage.

10. Compteur de cartes selon la revendication 6 caractérisé en ce que
l'indice de précompte a un code d'amorçage et comprend des codes d'information concernant au moins un élément parmi
(a) le type de cartes
(b) la date de précompte
(c) l'identification de l'opérateur de précompte,
et le système de vérification comprend des moyens pour stocker temporairement toute les informations.

11. Compteur de cartes selon la revendication 6 caractérisé en ce que
l'indice de précompte comprend des codes d'information concernant le type de carte, et
le système de vérification comprend
des moyens pour stocker les codes d'information de type de carte de précompte lus sur la première boîte de cartes d'un groupe de cartes lorsqu'un compte cumulé est à zéro, et
des moyens pour comparer les codes d'information de type de carte de précompte stockés à l'information de type de carte de précompte de boîtes de cartes comptées suivantes.

12. Compteur de cartes comprenant des premiers et seconds moyens pour compter une boîte de cartes pour obtenir simultanément des premiers et seconds comptes finals de cartes pour la boîte, et un système de vérification de compte,
caractérisé par
des moyens pour déterminer si les premiers et seconds comptes de cartes diffèrent l'un de l'autre pendant une période de comptage avant que les premiers et seconds comptes finals soient atteints; et
des moyens sensibles aux moyens de détermination pour détecter une erreur de phase si les premiers et seconds comptes différent pendant la période de comptage même si les premiers et seconds comptes finals de cartes sont les mêmes.

13. Compteur de cartes selon la revendication 12 caractérisé par
une mémoire de compte cumulé pour stocker le compte final des cartes de chacune d'une pluralité de boîtes, et des moyens pour interdire à la mémoire de compte cumulé de recevoir le compte final en réponse à la détection de l'erreur de phase.

14. Compteur de cartes selon la revendication 12 caractérisé par
une mémoire cumulative de compteur de cartes pour stocker les comptes de cartes d'une pluralité de boîtes, lorsque c'est autorisé,
des moyens pour autoriser la mémoire cumulative de compte de cartes à recevoir le compte final pour son stockage en réponse à une égalité des premiers et seconds comptes finaux, sauf interdiction, et
des moyens pour interdire la réception par la mémoire cumulative de comptage de cartes du compte final pour son stockage, en réponse à la détection d'une erreur de phase, même s'il y a par ailleurs autorisation en réponse à l'égalité des comptes finals.

15. Compteur de cartes de crédit selon l'une quelconque des revendications 12-14, caractérisé par
des moyens sensibles à la détection d'une erreur de phase pour indiquer l'emplacement dans un support de cartes d'où l'erreur de phase est survenue.
